# EUROPÄISCHE PATENTSCHRIFT

(11) **EP 4 004 498 B1**
(45) Veröffentlichungstag und Bekanntmachung des Hinweises auf die Patenterteilung: **12.02.2025**
(21) Anmeldenummer: 19752658.5
(22) Anmeldetag: 30.07.2019
(51) Int. Cl.: G01F 23/284, G01S 13/88, H01Q 1/22, G01S 15/88, H01Q 1/44, H01Q 19/08

(54) **MESSGERÄT ZUM ERFASSEN EINER PROZESSGRÖSSE IN EINEM BEHÄLTER**
MEASUREMENT DEVICE FOR DETERMINING A PROCESS VARIABLE IN A CONTAINER
DISPOSITIF DE MESURE POUR DÉTERMINER UNE VARIABLE DE PROCÉDÉ DANS UN RÉCIPIENT

(43) Veröffentlichungstag der Anmeldung: 01.06.2022
(73) Patentinhaber: VEGA Grieshaber KG, 77709 Wolfach (DE)
(72) Erfinder: DIETERLE, Levin, 77709 Oberwolfach (DE); WELLE, Roland, 77756 Hausach (DE); BÖRSIG, Jörg, 77776 Schapbach (DE); WÄLDE, Steffen, 78078 Niedereschach (DE); WEINZIERLE, Christian, 77709 Wolfach (DE)
(74) Vertreter: Maiwald GmbH
(86) Internationale Anmeldenummer: PCT/EP2019/070471
(87) Internationale Veröffentlichungsnummer: WO 2021/018384

(56) Entgegenhaltungen:
- WO-A1-00/29819
- WO-A1-03/085365
- WO-A1-2008/122474
- WO-A1-2010/069709
- WO-A1-92/21943
- WO-A2-01/79788
- AU-A- 1 499 200
- US-A1- 2006 196 262
- US-B1- 6 363 784

## Beschreibung

### Gebiet der Erfindung

Die Erfindung betrifft ein Messgerät zum Erfassen einer Prozessgröße in einem Behälter und einen Behälter mit einer Behälteröffnung und einem darin angeordneten Messgerät.

### Hintergrund der Erfindung

Sensoren, die Daten oder Eigenschaften von Prozessgrößen oder Stoffen innerhalb eines Behälters erfassen, werden üblicherweise außerhalb des Behälters am Behälter montiert, oder sie werden innerhalb des Behälters montiert und der Behälter nach der Montage dicht verschlossen, so dass das Füllmedium nicht aus dem Behälter austreten kann. Daher werden sie zum Beispiel von außen mittels Schraubgewinde installiert und die Elektronikeinheit sitzt außerhalb des Behälters, während sich die Sensorik (Antenne) innerhalb des Behälters befindet. Weiterhin gibt es Messgeräte, bei denen sich z.B. lediglich eine Antenne innerhalb des Behälters befindet.

Messgeräte bzw. Sensoren, die sich in einem dichten Behälter befinden, sind jedoch nicht ohne Weiteres flexibel montierbar oder demontierbar. Sensoren, die sich außerhalb des Behälters oder teilweise innerhalb des Behälters befinden, haben den Nachteil, dass die Behälter nicht platzsparend zusammengestellt werden können, zum Beispiel aufeinander gestapelt werden können. Des Weiteren besteht bei mobilen Behältern wie zum Beispiel sog. Intermediate Bulk Containern (IBCs, Großpackmittel) die Gefahr, dass die Sensorik beim Rangieren des Behälters mit dem Gabelstapler einen Schaden erleiden oder gar zerstört werden kann.

Die WO 03/085365 A1 beschreibt ein Radar-Füllstandmessgerät zur berührungslosen Messung eines Füllstandes in einem Behälter, das Elektronik und Antenne in einem Gehäuse hat. Die US 6 363 784 B1 beschreibt einen Füllstanddetektor mit einem Lichtsender, einem Lichtempfänger, einer elektrischen Schaltung und einem Glasgehäuse, das den Lichtempfänger, den Lichtsender und die elektrische Schaltung im Wesentlichen einkapselt, um den Detektor vor gefährlichen Umgebungen zu schützen.

### Zusammenfassung der Erfindung

Aufgabe der Erfindung ist es daher, ein Messgerät für einen Behälter und ein Behälter mit einem Messgerät zu finden, die so gestaltet sind, dass die Behälter platzökonomisch aufgestellt werden können, und das Messgerät dennoch flexibel montierbar ist.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die Erfindung wird durch die beigefügten Ansprüche definiert. Ausführungsformen und Beispiele, die nicht in den Ansprüchen enthalten sind, werden zur Veranschaulichung und zum besseren Verständnis der beanspruchten Erfindung dargestellt.

Gemäß einem ersten Aspekt wird ein Messgerät zum Erfassen einer Prozessgröße in einem Behälter bereitgestellt, aufweisend eine Elektronikeinheit mit einem Gehäuse und eine an dem Gehäuse anliegende Dichtanordnung. Das Messgerät ist eingerichtet, in einer Behälteröffnung angeordnet zu werden. Die Dichtanordnung ist eingerichtet, die Behälteröffnung abzudichten und die Elektronikeinheit ist unterhalb einer geometrischen Ebene der Dichtanordnung angeordnet, wenn sich das Messgerät in der Behälteröffnung befindet, d.h., wenn das Messgerät montiert ist.

Unter Messgerät wird hierbei eine Anordnung verstanden, die eine Einheit zur physikalischen Erfassung der Prozessgröße aufweist, z.B. einen physikalischen Sensor oder eine Generator-Empfänger-Anordnung für z.B. Ultraschallwellen oder Radar, sowie eine Elektronikeinheit, die zumindest die elektrische Energieversorgung bereitstellt, und die je nach Anwendungsfall zum Beispiel die erfasste Prozessgröße elektronisch aufbereitet und als digitale Daten zur Verfügung stellt. Die elektronischen Elemente, die hierzu verwendet werden können, wie z.B. Spannungsregler, Spannungswandler, Schutzschaltungen, Analog-Digitalwandler, Filter, Verstärker, Mikroprozessoren, Speicherbausteine, Signalgeneratoren, Schwingungserzeuger, Strahler, Piezowandler, etc., sind dem Fachmann bekannt.

Das Messgerät kann beispielsweise Substanzen oder Bestandteile eines Mediums, wie zum Beispiel einer Flüssigkeit oder eines Gases in einem Behälter bestimmen, oder eine Temperatur, einen Druck oder einen Füllstand erfassen. Das Messgerät weist, wie oben erwähnt, eine Elektronikeinheit zum Betreiben des Sensors und zum Bereitstellen der Messdaten auf, die in ein Gehäuse montiert ist. Das Gehäuse nimmt die Elektronikeinheit auf, schützt diese vor Umgebungseinflüssen und dient insbesondere zur Montage an bzw. in den Behälter. Hierzu weist das Gehäuse, gemäß einer Ausführungsform, z.B. ein Außengewinde auf, so dass es in eine Behälteröffnung mit einem entsprechenden Gewinde bis beispielsweise zu einer überstehenden Auflagefläche, z.B. einem umlaufenden Vorsprung am außerhalb des Behälters verbleibenden Ende des Gehäuses, eingeschraubt werden kann. Die Höhe des vorspringenden Teils kann z.B. so gewählt sein, dass sie eine definierte Kantenhöhe an der Oberseite des Behälters nicht überschreitet, so dass ein Stapeln der Behälter möglich ist. An der Auflagefläche zum Behälter hin umschließt eine Dichtanordnung, z.B. ein Dichtring, den Gewindeschaft am Ende des Gewindes. Vorzugsweise kann der Schaftteil, der von der Dichtanordnung umschlossen wird, gewindelos sein. Beim Einschrauben des Messgerätes wird der Dichtring gegen den Rand der Behälteröffnung gepresst, so dass eine Abdichtung des Behälters sichergestellt ist.

Die Dichtanordnung besteht erfindungsgemäß aus einem Dichtring, der im montierten Zustand des Messgerätes entlang der z.B. kreisförmigen Behälteröffnung verläuft und den Behälter abdichtet. Die Ebene der Dichtanordnung ist in diesem Fall die Kreisebene des an der kreisförmigen Öffnung anliegenden Dichtrings. Der Begriff "unterhalb" ist hierbei in dem Bezugssystem des Messgerätes zu sehen, bei dem im montierten Zustand die Richtung "nach unten" senkrecht zur Behälteröffnung in den Behälter hineinzeigt. Wird der Sensor also am Behälterdeckel montiert, bedeutet dies, dass der Teil "unterhalb" einer geometrischen Ebene der Dichtanordnung sich innerhalb des Behälters befindet. Wird der Sensor seitlich montiert, liegt die Ebene der seitlichen Behälteröffnung senkrecht zum Behälterboden, bzw. Behälterdeckel, und "unterhalb" dieser Ebene bezeichnet den Teil des Messgerätes, der in den Behälter hineinragt. Dieser Teil beherbergt die Elektronikeinheit. Diese befindet sich somit in dem Bereich des Gehäuses, der von dem Gewinde umgeben ist und sich im eingeschraubten Zustand innerhalb des Behälters befindet, wobei "innerhalb" durch die Ebene des Dichtrings, definiert ist.

Die Behälteröffnung kann dabei beispielsweise als Stutzen mit oder ohne Gewinde ausgebildet sein, der nach außen oder nach innen ragt. Sie kann weiterhin beispielsweise die gesamte Behälteroberseite sein, die von einem Behälterdeckel, der den Sensor aufweist, abgedeckt werden kann.

Gemäß einer Ausführungsform kann das Gehäuse ein Innengewinde oder ein Außengewinde aufweisen. Im Falle eines Außengewindes ist das Gehäuse zylindrisch und umschließt die Elektronikeinheit. Im Falle eines Innengewindes ist das Gehäuse erweitert, so dass es den Behälterdeckel bildet und auf den Behälterrumpf geschraubt wird. Die Elektronikeinheit kann dann zum Beispiel in einem Teil des Gehäuses einstückig mit dem erweiterten Gehäuse bzw. dem Behälterdeckel verbunden sein und im montierten, d.h. eingeschraubten Zustand nach unten in Richtung Behälterboden ragen. Die Dichtanordnung mit der oben definierten Dichtebene befindet sich dann entlang des Innengewindes.

Die Elektronikeinheit kann alternativ in einem zweiten wie oben beschriebenen Gehäuse von oben bzw. von außen in eine Behälteröffnung des ein erweitertes Gehäuse bildenden Behälterdeckels eingeschraubt werden, welcher ein Innengewinde aufweist.

Als weitere Alternative kann die Elektronikeinheit in einem getrennten Gehäuse von unten in den Behälterdeckel eingeschraubt werden. Das getrennte Gehäuse kann dabei eine zweite Dichtanordnung am unteren Ende des Außengewindes des getrennten Gehäuses aufweisen. Für die Definition "unterhalb einer geometrischen Ebene der Dichtanordnung" ist hierbei die Dichtanordnung am Innengewinde maßgebend.

Erfindungsgemäß weist die Elektronikeinheit einen Sensor, eine Antenne und eine Kommunikationseinheit auf. Der Sensor ist eingerichtet, ein Messsignal zu erfassen, indem er z.B. ein Radarsignal über die Antenne aussendet und das reflektierte Signal wieder über die Antenne empfängt, oder beispielsweise eine Temperatur oder einen Druck erfasst. Weiterhin kann er eine Auswerteeinheit beinhalten, die z.B. analoge Messsignale konditioniert und in digitale Daten wandelt, diese zwischenspeichert und ausgibt. Die Energieversorgung ist eingerichtet, den Sensor und eventuell die Antenne über eine geeignete Spannung mit Strom zu versorgen. Die Kommunikationseinheit ist eingerichtet, um z.B. Steuersignale zu empfangen, durch die z.B. eine Messung angestoßen wird, durch die bestimmte Daten in einem bestimmten Format abgerufen werden können oder durch die eine Synchronisation stattfinden kann. Die Kommunikationseinheit ist weiterhin zum Empfangen der digitalen Messdaten von dem Sensor, zum Einbetten und der Daten in ein Format, das einem Übertragungsprotokoll entspricht und schließlich zum Bereitstellen bzw. Übertragen der aus dem Messsignal generierten Messdaten gemäß dem Übertragungsprotokoll eingerichtet.

Die Kommunikationseinheit weist eine Kommunikationseinheit zur drahtlosen Kommunikation, beispielsweise über einen Niedrigenergie-Funkstandard wie z.B. LoRa, Sigfox, Bluetooth LE, oder NB-IOT, sein. Die Elektronikeinheit ist hierbei eingerichtet, durch eine Batterie, z.B. eine in das Gehäuse eingebaute Primärzelle wie z.B. eine Lithium-Batterie (Lithium-Thionylchlorid), mit elektrischer Energie versorgt zu werden, so dass keine externe Verkabelung des Messgeräts notwendig ist, und der Behälter für das Messgerät an einem beliebigen Ort aufgestellt werden kann. Alternativ, hier nicht beansprucht, kann die Kommunikationseinheit eine Kommunikationseinheit zur drahtgebundenen Kommunikation sein. Hierzu ist jedoch eine externe Schnittstelle zum Anschließen von Drähten notwendig, die z.B. seitlich am Gehäuse außerhalb des Behälters angeordnet ist. Der Vorteil dieser Variante ist, dass der Strom über die externe Schnittstelle zugeführt werden kann und somit eine Überwachung der Batteriespannung und Batteriewartung entfallen kann.

Das Gehäuse kann gemäß einer Ausführungsform zur Montage von der Behälteraußenseite aus eine Struktur zur Aufnahme eines Werkzeugs aufweisen. Eine solche Struktur ist z.B. eine Aussparung an der Oberseite des Messgeräts, die der Form des Werkzeugs, z.B. eines Fassschlüssels bzw. Spundschlüssels, entspricht, so dass das Werkzeug in die Aussparung eingreifen kann und das Ein- bzw. Ausschrauben des Messgeräts unterstützen kann.

Gemäß einer Ausführungsform ist die zum Behälterboden gerichtete Seite des Gehäuses innerhalb des Behälters derart geformt, dass sie eine oder mehrere Neigungen gegenüber der Waagrechten zum Ableiten von Flüssigkeit oder Kondensat aufweist. Die Flüssigkeit kann beispielsweise das Medium in dem Behälter sein oder ein Kondensat, das sich am Gehäuse in dem Behälter gebildet hat. Die Neigung kann zum Beispiel durch eine konische Ausbildung am unteren Teil des gemäß einer Ausführungsform zylindrischen Gehäuses realisiert werden. Die Flüssigkeit kann z.B. entlang der Neigung zur Spitze der konischen Form abgeleitet werden und dort abtropfen.

Das gemäß einer Ausführungsform zumindest zwischen der Dichtanordnung und der einen oder mehreren Neigungen zylindrische Gehäuse weist vorteilhafterweise in diesem Bereich einen konstanten Durchmesser auf. Beispielsweise beträgt der Durchmesser zwei Zoll. Damit kann z.B. in diesem Bereich das Gewinde, z.B. ein zwei-Zoll-Gewinde, angeordnet sein, und das gesamte Gehäuse kann bis auf den eventuell vorhandenen überstehenden Vorsprung z.B. von außen ein- und wieder ausgeschraubt werden.

Das Messgerät schließt gemäß einer Ausführungsform auf der Außenseite bündig mit dem Behälter und/oder dem Deckel in einer Ebene ab. Dies ist möglich, wenn zum Beispiel eine Einwölbung bzw. Vertiefung des Randes der Behälteröffnung vorhanden ist, die der Höhe des überstehenden Vorsprungs des Messgeräts, also dem Teil des Gehäuses oberhalb der Ebene der Dichtanordnung, entspricht. Alternativ kann der überstehende Vorsprung des Gehäuses fehlen und die Dichtanordnung überstehend in einer Kerbe des Gehäuses eingelassen sein, so dass die Dichtanordnung seitlich gegen beispielsweise einen oberen, gewindelosen Rand der Behälteröffnung gepresst wird.

Gemäß einer Ausführungsform weist das Messgerät ferner ein Belüftungs- und Entlüftungsventil zum Druckausgleich der Druckunterunterschiede auf, die z.B. durch Verdampfung des Mediums, Entnahme des Mediums, Befüllen des Behälters oder durch Temperaturänderungen auftreten. Hierfür werden entsprechende Kanäle zur Zu- und Ableitung der Luft oder des Gases in das Gehäuse eingebracht.

Gemäß einer Ausführungsform ist der Sensor ein Radarsensor, ein Ultraschallsensor oder ein Sensor zur Grenzstanderfassung. Ein Sensor zur Grenzstanderfassung kann, je nach Ausführungsform, auch seitlich in den Behälter eingeschraubt werden, d.h. die Behälteröffnung befindet sich dann in der Seitenwand des Behälters.

Gemäß einer Ausführungsform besteht das Gehäuse aus Kunststoff (z.B. Hart-Polyethylen, HDPE) und / oder Metall, wie z.B. Aluminium, Messing, oder Edelstahl.

Gemäß einem zweiten Aspekt wird ein Behälter mit einer Behälteröffnung und einem darin angeordneten Messgerät wie oben beschrieben bereitgestellt. Der Behälter kann beispielsweise ein Fass oder ein Kanister aus Kunststoff, Weißblech, Edelstahl oder Holz sein. Ein Kanister kann zum Beispiel einen gegenüber der Oberfläche abgesenkte Schrauböffnung mit einem Außengewinde oder einem Innengewinde aufweisen. Ein Holzfass kann beispielsweise eine Öffnung aufweisen, in die ein Adapter mit einem entsprechenden Innengewinde zur Aufnahme des Messgeräts eingebracht werden kann, oder das Gehäuse kann einen sich nach unten, also in das Fass hinein, verjüngenden Gewindedurchmesser aufweisen.

Dadurch, dass Messgerät durch seine Form vollständig oder nahezu vollständig in den Behälter eingeschraubt werden kann und nicht oder nur wenig oben herausragt, wird ermöglicht, dass mehrere Behälter z.B. aufeinandergestapelt werden können. Rechteckförmige Behälter mit seitlich montiertem Messgerät können je nach exakter Form des Behälters und Ausgestaltung des Gehäuses bzw. des Behälters ohne oder mit lediglich kleinem Abstand nebeneinander platziert werden.

### Kurze Beschreibung der Figuren

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden. Hierbei zeigt
Fig. 1 ein Diagramm eines Messgeräts für einen Behälter mit einer Elektronikeinheit außerhalb des Behälters,
Fig. 2 ein Diagramm eines Messgeräts für einen Behälter und eines Behälters gemäß einem ersten Ausführungsbeispiel mit einer Elektronikeinheit unterhalb der Dichtanordnung,
Fig. 3 ein Diagramm eines Messgeräts für einen Behälter und eines Behälters gemäß einem zweiten Ausführungsbeispiel mit einem Be- und Entlüftungsventil,
Fig. 4 ein Diagramm eines Messgeräts für einen Behälter und eines Behälters gemäß einem dritten Ausführungsbeispiel mit einem Grenzstandsensor nach kapazitivem Messprinzip,
Fig. 5 ein Diagramm eines Behälterdeckels und eines Messgeräts gemäß einem vierten Ausführungsbeispiel,
Fig. 6 ein Diagramm eines Messgeräts für einen Behälter und eine Behälters gemäß einem fünften Ausführungsbeispiel, bei dem die Messgerätoberseite und die Behälteroberseite bündig angeordnet sind,
Fig. 7 ein Diagramm eines Messgeräts für einen Behälter und eines Behälters gemäß einem sechsten Ausführungsbeispiel, bei dem die Messgerätoberseite und die Behälteroberseite ebenfalls bündig angeordnet sind.

Die Zeichnungen sind lediglich schematisch und nicht maßstabsgetreu. Grundsätzlich sind identische oder ähnliche Teile mit den gleichen Bezugszeichen versehen.

### Detaillierte Beschreibung der Figuren

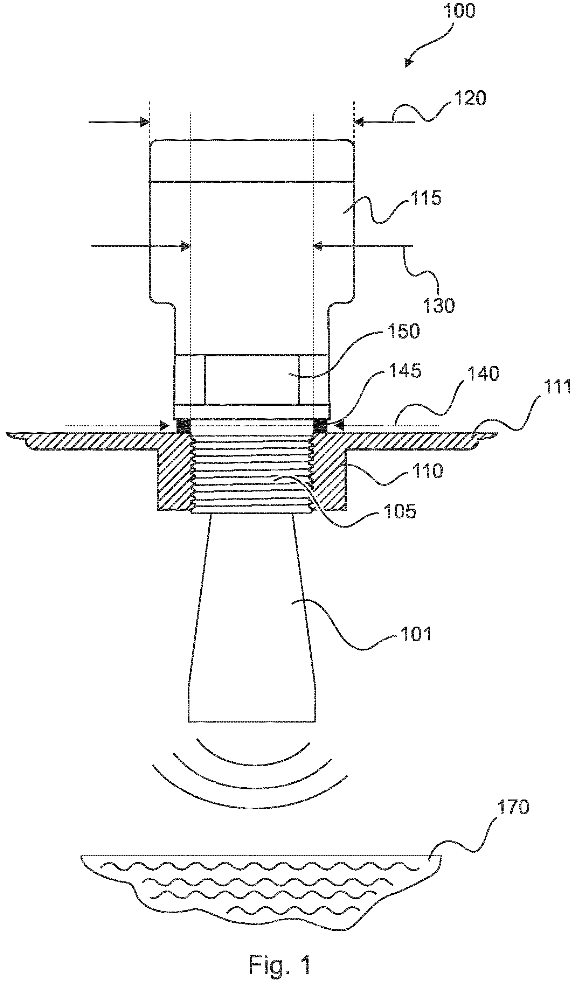

Fig. 1 zeigt als Beispiel einen Füllstandsensor 100, bei dem nur die Antenne 101 in den Behälter hineinragt, während das Elektronikgehäuse 115 sich außerhalb des Behälters befindet. Die Antenne 101 sendet Signale aus, zum Beispiel ein Radarsignal, das von der Flüssigkeit 170 in dem Behälter reflektiert wird und von der Antenne 101 zur Füllstandmessung wieder empfangen wird. Das Elektronikgehäuse 115 weist ein Gewinde 105 auf, das sich unterhalb des Elektronikgehäuses befindet und das eine Durchführung in dem Gewinde aufweist, wodurch die Antenne 101, die in den Behälter hineinragt, mit dem Sensor 150 verbunden werden kann. Das Außengewinde 105 des Gehäuses 115 greift hierbei in das Innengewinde 110 des Behälterdeckels 111 sein. Der Durchmesser 120 des Elektronikgehäuses 115 kann dabei größer als der Durchmesser 130 des Gewindes sein. In dem Beispiel in Fig. 1 ist das Gehäuse 115 breiter als die Öffnung für das Gewinde 105, so dass es beim Einschrauben auf die Dichtringe 145 gedrückt wird und die Anordnung dicht ist.

Die Elektronikeinheit in dem Gehäuse 115 ist in Fig. 1 oberhalb der Ebene 140, die durch den Dichtring 145 gebildet wird. Dadurch, dass die Durchmesser 120 des Elektronikgehäuses 115 größer sind als der Durchmesser 130 des Gewindes 105, kann die Elektronikeinheit nicht in den Behälter hineinragen. Somit steht das Elektronikgehäuse 115 nach oben aus dem Behälter hervor, so dass der Behälter nicht stapelbar ist.

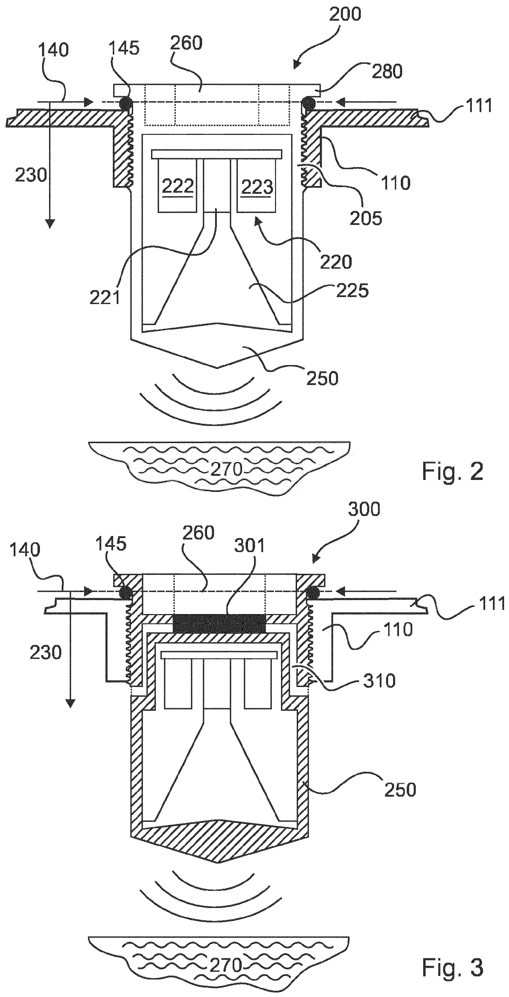

Fig. 2 zeigt schematisch ein Messgerät 200 gemäß einem zweiten Ausführungsbeispiel sowie einen Behälter 111. Das Messgerät 200 beinhaltet eine Elektronikeinheit 220 mit einem Sensor 221, einer Kommunikationseinheit 222 und einer Energieversorgungseinheit 223 einschließlich einer Antenne 225. Das Gehäuse 250 des Messgeräts 200 weist weiterhin ein Gewinde 205 auf, mit dem das Messgerät 200 in eine Öffnung des Behälters eingeschraubt werden kann, der ebenfalls ein entsprechendes Gewinde 110 aufweist. Das Messgerät 200 hat einen Durchmesser, der dem Gewindedurchmesser entspricht, so dass das Messgerät 200 fast vollständig, bis auf einen überhängenden Vorsprung 280, in den Behälter 290 hineingeschraubt werden kann. Der überhängende Vorsprung 280 begrenzt das Einschrauben, so dass das Messgerät 200 nicht durch das Gewinde 110 durchgeschraubt werden kann und ermöglicht außerdem die Ausübung eines Drucks auf den Dichtring 145, so dass das Gehäuse 250 des Messgeräts 200 den Behälter 290 dicht verschließt. Antenne 225 besitzt einen maximalen Durchmesser, welcher kleiner als der des Gewindes 110 bzw. des Gewindes 205 ist. Die Wände mit dem Gewinde 110 können auch nach oben ragen, so dass sie einen nach außen gerichteten Stutzen bilden. Weiterhin kann der Flansch 280 mit dem Behälter 111 verbunden werden, so dass kein Gewinde notwendig ist. Auch in diesem Fall befindet sich die Elektronikeinheit unterhalb der durch die Dichtanordnung, beispielsweise Dichtringe, definierte Ebene. Da durch die Dichtringe zwischen Flansch und Behälter die Anordnung dicht ist, kann der Durchmesser des Gehäuses kleiner sein als der Durchmesser der Behälteröffnung bzw. des nach oben oder unten ragenden Stutzens.

Die Elektronikeinheit befindet sich somit im Wesentlichen innerhalb des Behälters im medienzugewandten Halbraum 230, dessen obere Begrenzung durch die Dichtebene 140, in der der Dichtring 145 liegt, definiert wird. Die Gehäuseform auf der Behälteraußenseite weist dabei eine Geometrie 260 auf, welche das Einschrauben mit einem entsprechenden Werkzeug, beispielsweise einem Spundlochschlüssel, Fassöffnungsschlüssel, Fassschlüssel, lBC-Deckelschlüssel oder einem Sechskantschlüssel, erleichtert. Des Weiteren besitzt die Gehäusespitze eine beispielsweise konische Geometrie 250, welche das Abtropfen von Kondensat und Medium 270 erleichtert.

Fig. 3 zeigt ein Messgerät 300 in einer weiteren Ausführungsform, welcher zusätzlich zu den in Figur 2 gezeigten Merkmalen ein Be- und Entlüftungsventil 301 aufweist, welches über die Gaskanäle 310 einen Druckausgleich zwischen der Behälterinnenseite und der Umgebung ermöglicht, um Befüll- bzw. Entleervorgänge zu erleichtern.

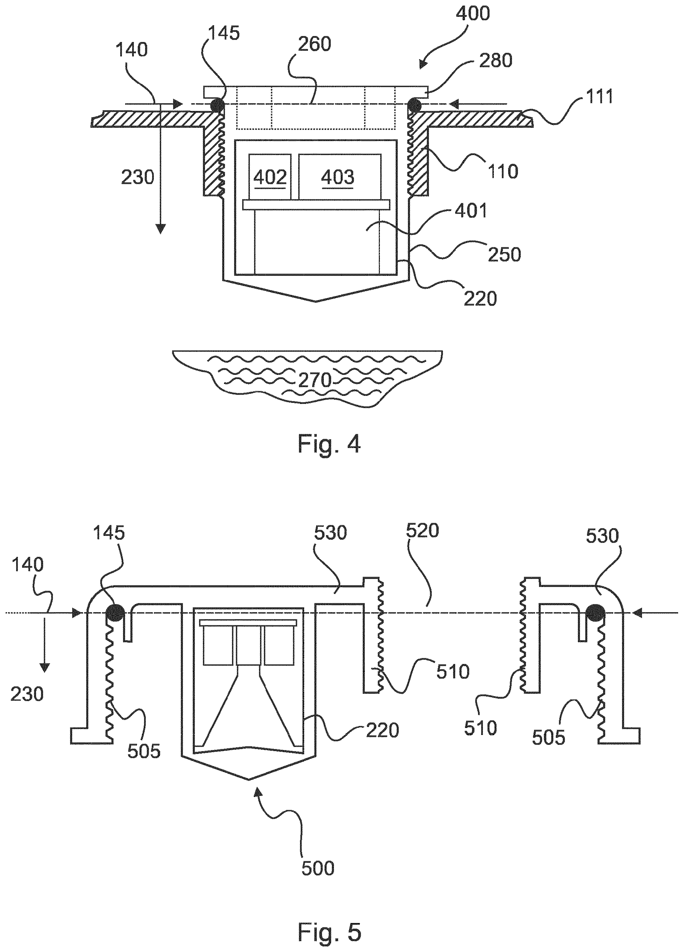

Fig. 4 zeigt ein Messgerät 400 in einer weiteren Ausführungsform, wobei es sich bei dem Sensor 401 um einen Grenzstandsensor 401 handelt, welcher beispielsweise nach dem kapazitiven Messprinzip funktioniert. Das heißt, gegenüber der Anordnung in Fig. 2 fehlt die Antenne 225, und die Kommunikationseinheit 402 und die Energieversorgungseinheit 403 liegen über dem Grenzstandsensor 401. Auch in diesem Ausführungsbeispiel ist die komplette Elektronikeinheit bestehend aus Kommunikationseinheit 402, Energieversorgungseinheit 403 und Grenzstandsensor 401 komplett unterhalb der Dichtebene 140 angeordnet. Lediglich der obere Vorsprung 280 ragt aus dem Behälter heraus. Je nach eingesetztem Messprinzip kann die Geometrie des dem Medium zugewandten Gehäuseteiles entsprechend der physikalischen Anforderung des Messprinzips ausgestaltet sein.

Fig. 5 zeigt einen Behälterdeckel 530 und ein Messgerät 500, das einstückig in den Behälterdeckel 530 integriert ist, in einer weiteren Ausführungsform. Der Behälterdeckel 530 weist ein Innengewinde 505 auf, so dass er auf den Behälter geschraubt werden kann. Der Behälterdeckel kann beispielsweise in der Größe DN 150 mit NW 150 - Innengewinde S 165x7 bzw. in der Größe DN 225 mit NW 225 - Innengewinde S245x6 ausgeführt sein, sowie einen oder mehrere optionale Gewindeanschlüsse 510 mit jeweils einer optionalen Behälteröffnung 520 zum Einschrauben z.B. eines Messgeräts oder zum Einführen eines Saugstutzens aufweisen. Gemäß den Ausführungsbeispielen kann der Behälterdeckel 530 auch entweder nur das einstückig integrierte Messgerät 500 aufweisen, das heißt ohne weitere Behälteröffnung 520 und Gewinde 510. Des Weiteren kann der Behälterdeckel 530 nur die Öffnung 520 mit Gewinde 510 ohne Messgerät 500 aufweisen, in das ein oben erläutertes Messgerät eingeschraubt werden kann. Die Dichtebene des Messgerätes liegt auch in diesen Ausführungsbeispielen oberhalb der Elektronikeinheit 220. Des Weiteren kann der Deckel auch ein Be- und Entlüftungsventil aufweisen.

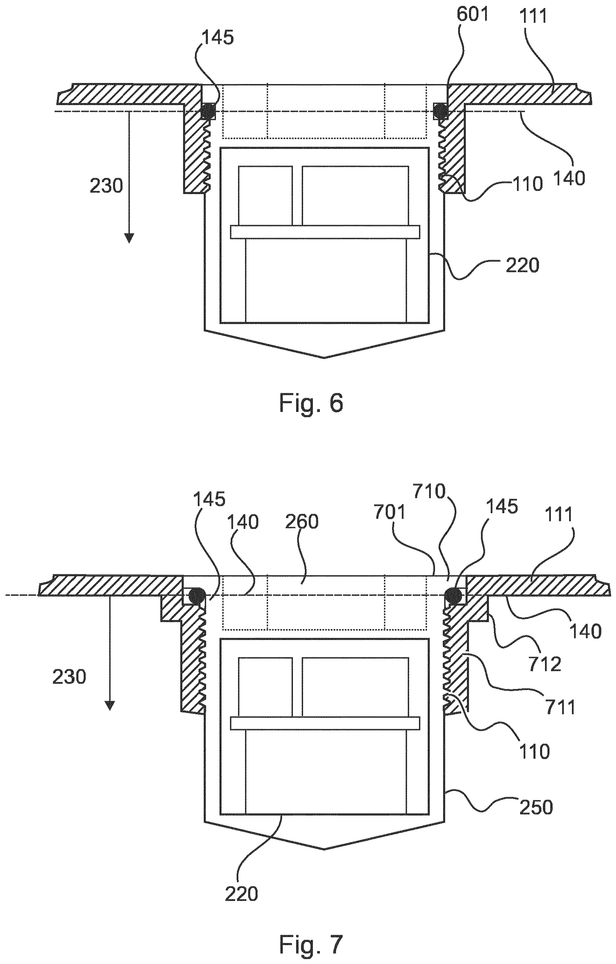

Fig. 6 zeigt ein Messgerät für einen Behälter und einen Behälter gemäß einem fünften Ausführungsbeispiel, bei dem die Messgeräteoberseite 601 und die Behälteroberseite 111 im montierten Zustand bündig, d.h. planar sind. Der Dichtring 145 wird beim bzw. nach dem Eindrehen seitlich an die Behälteröffnung gepresst wird. Vorzugsweise weist die Wand der Behälteröffnung am oberen Teil kein Gewinde auf, so dass der Dichtring beim Einschrauben an diesem Teil der Wand nach unten gleiten kann.

Fig. 7 zeigt ein Messgerät für einen Behälter und einen Behälter mit einem Gewinde 110 gemäß einem sechsten Ausführungsbeispiel, bei dem die Messgerätoberseite 701 und die Behälteroberseite 111 ebenfalls bündig angeordnet sind. In diesem Beispiel ist die Wand der Behälteröffnung in einen ersten Teil 711 mit dem Gewinde 110 und einen zweiten Teil 712 ohne Gewinde, der zu dem ersten Teil nach außen versetzt angeordnet ist, unterteilt. Das Gehäuse 250 weist an seinem oberen Teil einen umlaufenden Vorsprung 710 auf, der beim Eindrehen des Gehäuses 250 in die Behälteröffnung den Dichtring 145 auf die Oberseite des ersten Teils 711 presst und somit die Dichtwirkung erreicht wird.

Auch in den Ausführungsbeispielen nach Fig. 6 und Fig. 7 befindet sich die Elektronikeinheit 220 jeweils unterhalb der aus dem Dichtring gebildeten Ebene 140, so dass die Behälter mit den montierten Messgeräten eine äußere Form aufweisen, die es erlaubt, die Behälter auch an platzkritischen Orten aufzustellen bzw. zu stapeln, und wobei die Messgeräte dennoch flexibel entnehmbar oder einsetzbar sind.

## Patentansprüche

1. Messgerät (200) zum Erfassen einer Prozessgröße in einem Behälter, aufweisend eine Elektronikeinheit (220) mit einem Gehäuse (250) und eine an dem Gehäuse (250) anliegende Dichtanordnung (145), wobei
das Messgerät (200) eingerichtet ist, in einer Behälteröffnung angeordnet zu werden; wobei,
wenn sich das Messgerät (200) in der Behälteröffnung befindet, die Dichtanordnung (145) eingerichtet ist, die Behälteröffnung abzudichten;
wobei die Elektronikeinheit (220) aufweist:
einen Sensor (221) zum Erfassen eines Messsignals;
eine Energieversorgung (223);
eine Antenne (225), die mit dem Sensor (221) verbunden ist, zum Senden und Empfangen des Messsignals; und
eine Kommunikationseinheit (222), zum Empfangen von Steuersignalen, und zum Bereitstellen und Übertragen von Messdaten aus dem Messsignal gemäß einem Übertragungsprotokoll;
**dadurch gekennzeichnet, dass** die Elektronikeinheit unterhalb einer geometrischen Ebene der Dichtanordnung und gleichzeitig innerhalb des Behälters angeordnet ist, und die Dichtanordnung als Dichtring ausgestaltet ist,
und dass die Kommunikationseinheit (222) eine Kommunikationseinheit zur drahtlosen Kommunikation ist, und die Elektronikeinheit (220) eingerichtet ist, durch eine Batterie mit elektrischer Energie versorgt zu werden.

2. Messgerät (200) nach Anspruch 1, wobei das Gehäuse (250) ein Gewinde (205) zum Einschrauben des Messgeräts (200) in die Behälteröffnung aufweist.

3. Messgerät (200) nach Anspruch 2, wobei das Gewinde (250) ein Innengewinde oder ein Außengewinde ist.

4. Messgerät (200) nach einem der vorhergehenden Ansprüche, wobei das Gehäuse (250) zur Montage von der Behälteraußenseite aus eine Struktur (260) zur Aufnahme eines Werkzeugs aufweist.

5. Messgerät (200) nach einem der vorhergehenden Ansprüche, wobei die zum Behälterboden gerichtete Seite des Gehäuses (250) innerhalb des Behälters derart geformt ist, dass sie eine oder mehrere Neigungen gegenüber der Waagrechten zum Ableiten von Flüssigkeit oder Kondensat aufweist.

6. Messgerät (200) nach einem der vorhergehenden Ansprüche, wobei das Messgerät (200) auf der Außenseite bündig mit dem Behälter und/oder einem Deckel des Behälters in einer Ebene abschließt.

7. Messgerät (200) nach einem der vorhergehenden Ansprüche, wobei das Gehäuse (250) zumindest zwischen der Dichtanordnung (145) und der einen oder mehreren Neigungen eine zylindrische Form mit konstantem Durchmesser aufweist.

8. Messgerät (200) nach einem der vorhergehenden Ansprüche, wobei das Messgerät (200) ferner ein Be- und Entlüftungsventil (301) aufweist.

9. Messgerät (200) nach einem der vorhergehenden Ansprüche, wobei der Sensor (221) ein Radarsensor, ein Ultraschallsensor oder ein Sensor zur Grenzstanderfassung ist.

10. Messgerät (200) nach einem der vorhergehenden Ansprüche, wobei das Gehäuse (250) aus Kunststoff und / oder Metall besteht.

11. Behälter mit einer Behälteröffnung und einem darin angeordneten Messgerät (200) nach einem der Ansprüche 1 bis 10.

## Claims

1. Measuring device (200) for detecting a process variable in a container, comprising an electronic unit (220) with a housing (250) and a sealing arrangement (145) bearing against the housing (250), wherein
the measuring device (200) is arranged to be disposed in a container opening; wherein,
when the measuring device (200) is located in the container opening, the sealing arrangement (145) is set up to seal the container opening;
wherein the electronic unit (220) has
a sensor (221) for detecting a measurement signal;
an energy supply (223);
an antenna (225) connected to the sensor (221) for transmitting and receiving the measurement signal; and
a communication unit (222), for receiving control signals, and for providing and transmitting measurement data from the measurement signal according to a transmission protocol;
**characterised in that** the electronic unit (220) is arranged below a geometric plane of the sealing arrangement (145) and at the same time inside the container; and the sealing arrangement (145) is designed as a sealing ring;
and **in that** the communication unit (222) is a communication unit for wireless communication, and the electronic unit (220) is arranged to be supplied with electrical energy by a battery.

2. The measuring device (200) according to claim 1, wherein the housing (250) has a thread (205) for screwing the measuring device (200) into the container opening.

3. The measuring device (200) according to claim 2, wherein the thread (205) is an internal thread or an external thread.

4. The measuring device (200) according to any one of the preceding claims, wherein the housing (250) comprises a structure (260) for receiving a tool for mounting from the outside of the container.

5. The measuring device (200) according to any one of the preceding claims, wherein the side of the housing (250) facing the bottom of the container is shaped within the container such that it has one or more inclinations relative to the horizontal for draining liquid or condensate.

6. The measuring device (200) according to any one of the preceding claims, wherein the measuring device (200) is flush on the outside with the container and/or a lid of the container in one plane.

7. The measuring device (200) according to any one of the preceding claims, wherein the housing (250) has a cylindrical shape with a constant diameter at least between the sealing arrangement (145) and the one or more inclinations.

8. The measuring device (200) according to any one of the preceding claims, wherein the measuring device (200) further comprises an aeration and deaeration valve (301).

9. The measuring device (200) according to any one of the preceding claims, wherein the sensor (221) is a radar sensor, an ultrasonic sensor or a sensor for point level detection.

10. The measuring device (200) according to any one of the preceding claims, wherein the housing (250) is made of plastic and/or metal.

11. A container comprising a container opening and a measuring device (200) arranged therein according to any one of claims 1 to 10.

## Revendications

1. Appareil de mesure (200) pour détecter une grandeur de processus dans un récipient, présentant une unité électronique (220) avec un boîtier (250) et un agencement d'étanchéité (145) en contact avec le boîtier (250), dans lequel
l'appareil de mesure (200) est conçu pour être disposé dans une ouverture de récipient ; dans lequel,
lorsque l'appareil de mesure (200) se trouve dans l'ouverture de récipient, l'agencement d'étanchéité (145) est conçu pour fermer hermétiquement l'ouverture de récipient ;
dans lequel l'unité électronique (220) présente :
un capteur (221) pour détecter un signal de mesure ;
une alimentation en énergie (223) ;
une antenne (225) connectée au capteur (221) pour émettre et recevoir le signal de mesure ; et
une unité de communication (222) pour recevoir des signaux de commande et pour fournir et transmettre des données de mesure à partir du signal de mesure selon un protocole de transmission ;
**caractérisé en ce que** l'unité électronique est disposée en dessous d'un plan géométrique de l'agencement d'étanchéité et en même temps à l'intérieur du récipient, et l'agencement d'étanchéité est réalisé sous la forme d'une bague d'étanchéité,
et **en ce que** l'unité de communication (222) est une unité de communication pour une communication sans fil, et l'unité électronique (220) est conçue pour être alimentée en énergie électrique par une batterie.

2. Appareil de mesure (200) selon la revendication 1, dans lequel le boîtier (250) présente un filetage (205) pour visser l'appareil de mesure (200) dans l'ouverture de récipient.

3. Appareil de mesure (200) selon la revendication 2, dans lequel le filetage (250) est un filetage intérieur ou un filetage extérieur.

4. Appareil de mesure (200) selon l'une des revendications précédentes, dans lequel le boîtier (250) présente une structure (260) destinée à recevoir un outil pour le montage depuis le côté extérieur du récipient.

5. Appareil de mesure (200) selon l'une des revendications précédentes, dans lequel le côté du boîtier (250) orienté vers le fond de récipient est conformé à l'intérieur du récipient de manière à présenter une ou plusieurs inclinaisons par rapport à l'horizontale pour l'évacuation d'un liquide ou d'un condensat.

6. Appareil de mesure (200) selon l'une des revendications précédentes, dans lequel l'appareil de mesure (200) se termine sur le côté extérieur dans un même plan avec le récipient et/ou un couvercle du récipient.

7. Appareil de mesure (200) selon l'une des revendications précédentes, dans lequel le boîtier (250) présente une forme cylindrique de diamètre constant au moins entre l'agencement d'étanchéité (145) et lesdites une ou plusieurs inclinaisons.

8. Appareil de mesure (200) selon l'une des revendications précédentes, dans lequel l'appareil de mesure (200) présente en outre une soupape d'aération et de purge d'air (301) .

9. Appareil de mesure (200) selon l'une des revendications précédentes, dans lequel le capteur (221) est un capteur radar, un capteur à ultrasons ou un capteur de détection de niveau limite.

10. Appareil de mesure (200) selon l'une des revendications précédentes, dans lequel le boîtier (250) est en plastique et/ou en métal.

11. Récipient comportant une ouverture de récipient et un appareil de mesure (200) selon l'une des revendications 1 à 10 disposé à l'intérieur de celle-ci.
